# EUROPEAN PATENT SPECIFICATION

(11) **EP 2 566 646 B1**
(45) Date of publication and mention of the grant of the patent: **12.08.2015**
(21) Application number: 11719728.5
(22) Date of filing: 02.05.2011
(51) Int. Cl.: B23B 51/02, B23C 3/30, B23C 5/08, B23C 5/12, B23P 15/32

(54) **DRILL BIT, DEVICE AND METHOD FOR PRODUCING A DRILL BIT**
BOHRER, VORRICHTUNG UND VERFAHREN ZUR HERSTELLUNG EINES BOHRERS
FORET, DISPOSITIF ET PROCÉDÉ DE PRODUCTION D'UN FORET

(30) Priority: 04.05.2010 DE 102010019379
(43) Date of publication of application: 13.03.2013
(73) Proprietor: Heller Tools GmbH, 49413 Dinklage (DE)
(72) Inventor: LAMPE, Rainer, 49413 Dinklage (DE); ALBERS, Hermann, 49413 Dinklage (DE)
(74) Representative: Gottschald, Jan
(86) International application number: PCT/US2011/034771
(87) International publication number: WO 2011/139960

(56) References cited:
- EP-A2- 0 653 544
- DE-A1- 19 923 792
- DE-U1- 20 219 563
- FR-A1- 2 654 663
- FR-A1- 2 808 462
- US-A- 5 382 121
- US-A1- 2008 206 007

## Description

The invention relates to a drill bit according to the preamble of claim 1. The invention also relates to a device for producing a drill bit according to the preamble of claim 4 and to a method for producing a drill bit according to the preamble of claim 6.

EP 0 843 772 B1 describes various variants for shaping and producing drill bits having a drill head which is made of carbide and is inserted into a slot-shaped connecting groove in an end region of the shank. Extending next to the connecting groove are transition surfaces of the shank which form the transition to a helix. The transition surfaces are each provided with surface sections, wherein the two surface sections are set against one another and converge at an intersecting edge. In particular, the two surface sections are each flat and are oriented at different angles both relative to the longitudinal axis of the shank and relative to the longitudinal extent of the connecting groove accommodating the drill head. The production of the drill bit having transition surfaces designed in such a way is complicated.

German patent application DE 199 23 792 A1 discloses a drilling tool with at least one cutting element, which is inserted or soldered into a slit which extends orthogonally to a longitudinal axis of the drill and which is arranged within a drill head of the drilling tool. The cutting element abuts at the base of the slit. The drill head comprises at least one recess which deepens the slit in the axial direction.

United States patent application publication US 2008/0206007 A1 discloses an insert, a slotting cutter assembly and a method for machining a plurality of slots in a metallic alloy part. The slotting cutter assembly comprises a plurality of inserts and a cutter body. The cutter body comprises a plurality of retaining slots and a plurality of support portions. The retaining slot is configured to receive the insert. The support portion provides support for the insert.

Example of prior art solutions can be found in documents US 5 382 121 A, FR2808462 A1, EP0653544 A2, DE 20219563 U1 and FR 2654663 A1.

The problem addressed by the invention is to specify a drill bit, a method for producing it and a production device in such a way that especially simple production in a few operations is made possible.

For a drill bit mentioned at the beginning, the above problem is solved according to the invention by the characterizing features of claim 1.

The construction of the transition surface from surface curves which in each case originate from a parallel displacement of at least one segment of the groove base curve leads to ease of production and in particular to a drill bit which works effectively.

Transition surfaces in the context of the invention are planar regions of the shank which are arranged in particular on both sides of the connecting groove and which extend over most of the connecting groove. The transition surfaces form a substantial portion of the axial transition from the top marginal region of the connecting groove to the helix.

A "surface curve" of such a transition surface refers to any curve which extends over the transition surface and which lies completely in the transition surface.

A "groove base curve" in the context of the invention is a curve along which the base of the connecting groove extends longitudinally. Individual recesses or the like which are incorporated in the base of the connecting groove do not influence the longitudinal extent of the base of the connecting groove in this context.

The transition surfaces arranged in particular on both sides of the connecting groove can be designed symmetrically at least in a region around the connecting groove. Depending on requirements, however, said transition surfaces can also be surfaces which vary in shape and orientation.

As mentioned above the transition surfaces play a considerable part in the axial transition from the top marginal region of the connecting groove to the helix. Against this background, provision is made for the transition surface to extend axially starting from the top marginal region of the connecting groove, at any rate in sections over more than half the depth of the connecting groove.

The groove base curve has a straight course. A straight course of the groove base curve can be produced in an especially simple manner.

In general the groove base curve, depending on requirements imposed on the configuration of the transition surfaces, can have both curved and straight sections. It is possible to arrange straight sections in a row with angles provided in between, e.g. while forming a roof-shaped groove base curve overall.

The transition surface is preferably designed to be continuous and has no edges. This has proved to be especially advantageous for the removal of the drillings. In an especially preferred embodiment, the transition surface is even designed to be flat. This can be realized especially easily from the production point of view. The outline of the transition surface is substantially trapezoidal.

Furthermore, in particular in the case of the flat transition surface, the transition surface is preferably inclined relative to the longitudinal axis of the shank. with the degree of the inclination of the transition surface, the removal of drillings can be specifically set. Especially good results have been shown at an angle of inclination of between about 30° and about 40°, in particular around about 35°.

The transition surface extends over a substantial part of the width of the shank, in particular over the entire width of the shank. This is very simple to achieve from the production point of view.

For a device mentioned at the beginning, the above problem is achieved by the characterizing features of claim 4. Steps for machining the shank can be saved or simplified by the arrangement of a second tool part next to the first tool part for the simultaneous incorporation of the connecting groove and at least one transition surface in the shank.

In a preferred development of the device, a third tool part is arranged on the opposite side of the first tool part with respect to the second tool part and is rotatable together with the first tool part about the same rotation axis, wherein, at the same time as the connecting groove is incorporated, a second transition surface is shaped by the third tool part, said transition surface being arranged on the opposite side of the connecting groove with respect to the first transition surface. In the production method according to the invention, the connecting groove for accommodating the drill head and both transition surfaces adjoining the connecting groove can be produced simultaneously in one operation by such a device. The simultaneous incorporation of the connecting groove and a transition surface in the context of the invention refers to the fact that simultaneous removal of material for shaping the transition surface and of material for shaping the connecting groove takes place.

In an especially advantageous manner, at least one of the tool parts has a blade for the controlled removal of a chip from the shank. Thus, for example, the first tool part can be formed as a saw, the connecting groove being sawn in the shank. Alternatively or additionally, the second and/or the third tool part can be formed as milling tools with a milling blade for controlled cutting.

For a method mentioned at the beginning, the above problem is solved by the features of claim 6. A movement of the device and the shank relative to one another refers in the context of the invention to any relative movement resulting from an overlap of device and shank with resulting material removal for forming the connecting groove and the transition surface. In this case, either the device can be in a fixed position and the shank can be moved relative to the device or the shank can be clamped in a fixed position and the device can be moved relative to the shank, or both the shank and the device can be moved relative to the fixed location, and relative to one another.

In this case, according to the device for producing a drill bit according to the features of either of claims 4 and 5, simultaneous removal of material of the transition surface and of material of the connecting groove is effected, at least over a section of the relative movement. As a result in particular separate operations taking place in succession for shaping the connecting groove and the transition surface can be dispensed with.

In an advantageous development, the longitudinal axis of the shank and the rotation axis of the device are in this case disposed substantially perpendicularly to one another. As a result, the connecting groove can be slit parallel to the longitudinal axis of the shank in a simple manner. In principle, the longitudinal axis of the shank and the rotation axis can enclose largely any desired angles with one another, such that the vertical extent of the connecting groove is not necessarily oriented parallel to the longitudinal axis of the shank.

In an embodiment of the invention, the movement of the device relative to the shank runs along a straight line, wherein the straight line is disposed in particular perpendicularly to the longitudinal axis of the shank and, in a further preferred manner, runs through the longitudinal axis of the shank. As a result, inter alia, a flat connecting groove base can be formed, wherein transition surfaces which have a flat surface are advantageously formed.

In very general terms, the movement of the device relative to the shank runs along a machining trajectory, such a machining trajectory can have largely any desired form. The machining trajectory preferably lies completely in a plane parallel to the longitudinal axis of the shank, wherein the longitudinal axis of the shank, in a further preferred manner, lies in this plane. For example, the machining trajectory can have the form of a curved line, in which case the curved line can pass through, in particular, a local maximum or a local minimum. The curved line can also have straight sections or the machining trajectory can consist of curved and straight sections or only of straight sections angled relative to one another. A completely straight line is also a machining trajectory in the context of the invention.

The drill bit according to the proposal is preferably configured as a masonry drill bit which is designed in particular for hammer operation. However, the solution according to the proposal can also be applied to all other conceivable types of drill bit.

Further advantages and features of the invention follow from the exemplary embodiments described below and from the dependent claims.

Several exemplary embodiments of the invention are described below and are explained in more detail with reference to the attached drawings, in which:
- fig. 1: shows a three-dimensional schematic view of a device according to the invention for producing a drill bit during machining of a drill bit according to the invention,

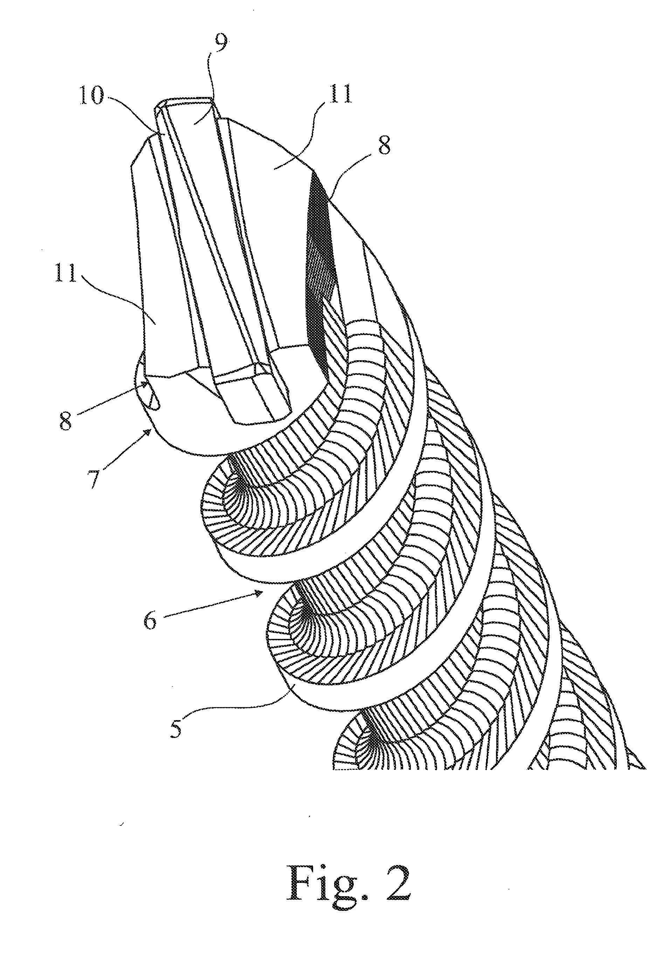

- fig. 2: shows a three-dimensional view of a first exemplary embodiment of a drill bit according to the invention having a shank and a drill head,

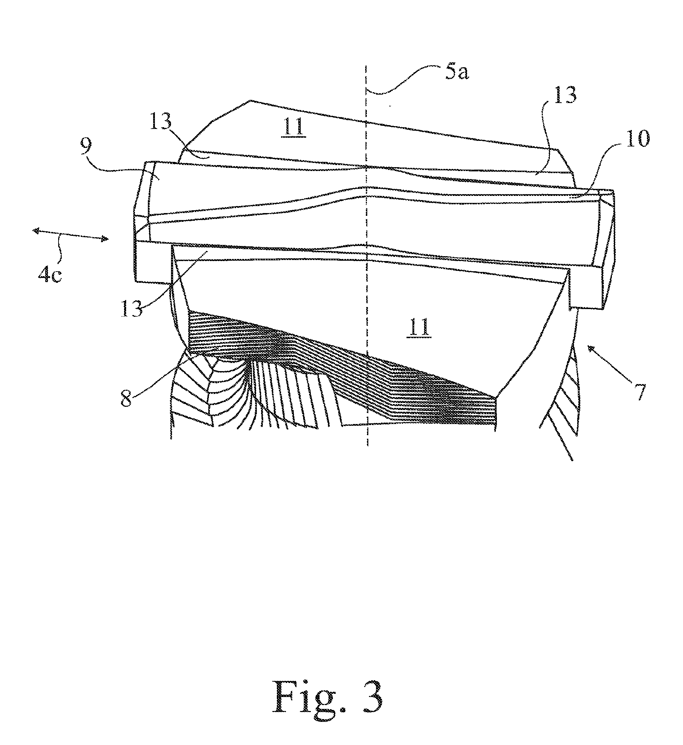

- fig. 3: shows a further three-dimensional view of the drill bit from fig. 2,
- fig. 4: shows a three-dimensional view of the shank of the drill from fig. 2 without inserted drill head,
- fig. 5: shows the shank of a drill bit according to a second exemplary embodiment not according to the invention,

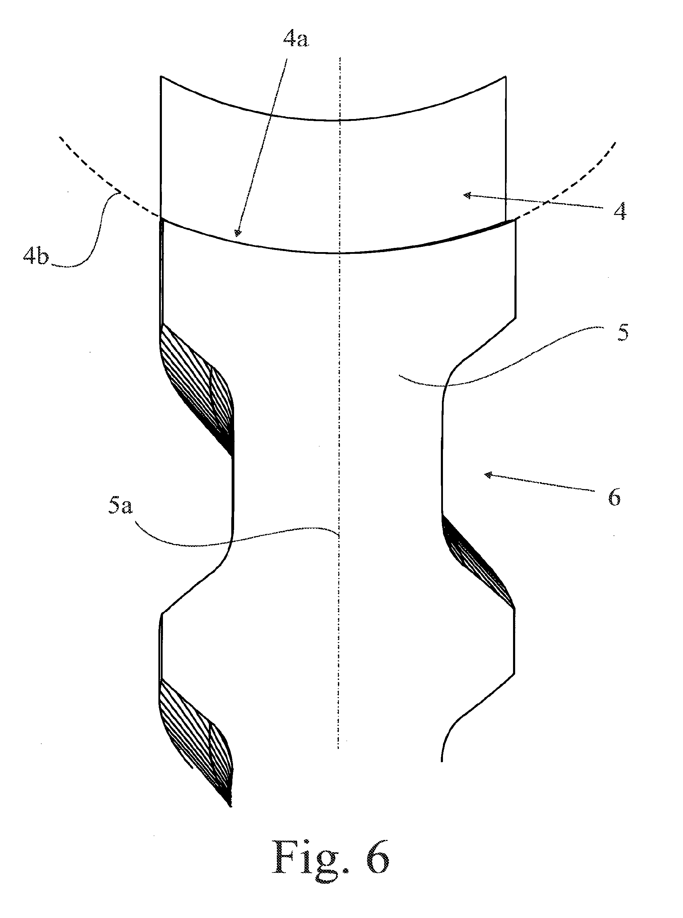

- fig. 6: shows a plan view of a half section of the drill bit from fig. 5 along the longitudinal axis of the shank, fig. 7 shows a three-dimensional view of the shank of a further exemplary embodiment of a drill bit not according to the invention,
- fig. 8: shows a plan view of a half section of the drill bit from fig. 7 along the longitudinal axis of the shank.

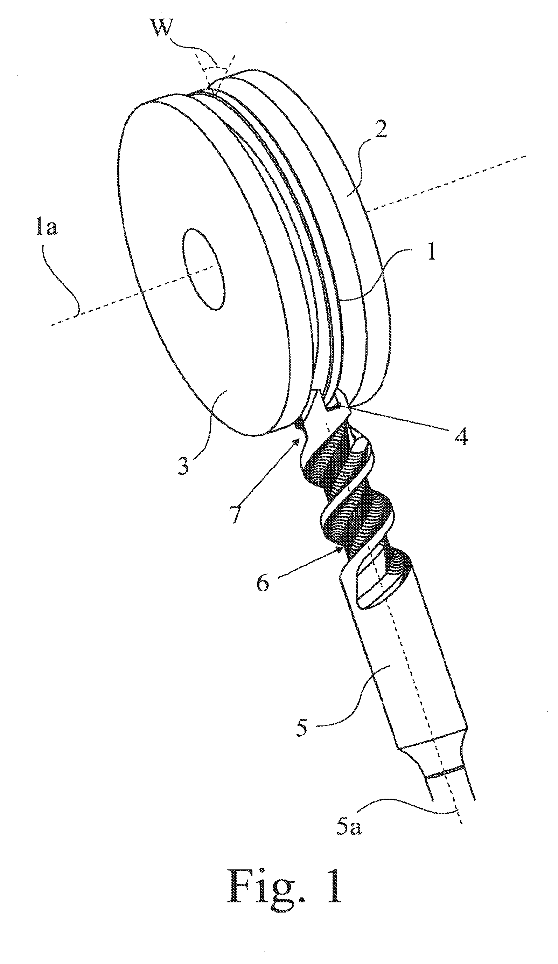

The device shown in fig. 1 for producing a drill bit which comprises a shank 5 having a helix 6 and a drill head 9 exhibits a first central tool part 1 and two tool parts 2, 3 arranged on both sides of the tool part 1. The tool parts 1, 2, 3 are only shown schematically with respect to an enveloping form which results from rotation of the tool parts 1, 2, 3 about a common rotation axis 1a. The tool parts 1, 2, 3 are expediently accommodated on a common rotary shaft (not shown) for rotation therewith.

The central tool part 1 is a saw like a circular saw blade for machining a connecting groove 4 in a front end of the shank 5 of a drill bit.

The tool parts 2, 3 are peripheral milling cutters with milling blades (not shown), the milling blades having in particular a straight edge which is inclined by an angle W relative to a plane perpendicular to the rotation axis 1a.

In a known manner, the shank 5 of the drill bit has the helix 6 for removing drillings, the helix 6 ending at a front end region 7 of the shank 5. An insertion end of the drill bit for accommodating in, for example, a rotary hammer, said insertion end being arranged at the opposite end of the shank 5, is not shown in detail. Said insertion end can be in particular an SDS-plus® or SDS-max® insertion end.

In the present example, the helix 6 is shaped in a grinding or milling process, with rotation and simultaneous axial linear movement of the shank 5. When the helix 6 has been shaped, the rotary movement of the shank 5 is stopped and only the axial linear movement is continued, such that two steep, stepped flanks 8 are shaped in the end region 7 of the shank 5.

The end region 7 comprises the connecting groove 4, which extends in the form of a longitudinal slot over the entire width of the shank 5 and has a base 4a and two parallel side walls. A drill head 9 made of carbide is inserted into the connecting groove 4 and secured in a known manner by brazing. In the present example, the drill head 9 is provided with cutting edges 10 which extend outward from the longitudinal axis 5a of the shank 5. Here, the cutting edges 10 are preferably set against one another and form a substantially roof-shaped drill head 9 overall.

Here, two transition surfaces 11 of the shank 5 are formed on both sides of the connecting groove 4, wherein, in the present example, both transition surfaces 11 have been produced simultaneously with the milling-out of the connecting groove 4 by means of the device shown in fig. 1.

On account of the movement of the shank 5 and of the tool parts 1, 2, 3 relative to one another, the transition surfaces 11 are formed in the course of the production in such a way that said transition surfaces 11 each originate from a parallel displacement of a groove base curve 4b. The meaning of the term "groove base curve" was explained further above.

Essential in the context of the invention is the principle that, by the simultaneous fashioning, explained in connection with fig. 1, of the connecting groove 4 and the transition surfaces 11 by means of rotating tool parts 1, 2, 3 and a movement of the shank 5 relative to the tool parts 1, 2, 3, transition surfaces 11 having surface curves 12 are produced which originate from parallel displacements of a groove base curve 4b. In the figures, in each case only a single surface curve 12 representing all further surface curves is shown.

In the course of the shaping of the connecting groove 4 and of the transition surfaces 11, the shank 5 or the tool part 1, 2, 3 in fig. 1 is moved in the direction of the groove extent 4c, which runs perpendicularly to the rotation axis 1a of the tool part 1, 2, 3 and perpendicularly to the longitudinal axis 5a of the shank 5.

A movement of the shank 5 relative to the tool part 1, 2, 3 in the direction of the rotation axis 1a is not effected in the present exemplary embodiment, but can in principle also be provided.

A relative movement of shank 5 and tool part 1, 2, 3 in the direction of the longitudinal axis 5a of the shank 5 is not provided in the first exemplary embodiment in the course of the production of the connecting groove 4 (straight machining trajectory), but can in principle be provided (non-linear machining trajectory, preferably completely in a plane oriented parallel to the longitudinal axis 5a and the groove extent 4c).

On account of the above-described relative movements and of the above-described shaping by the tool parts 1, 2, 3, a connecting groove 4 of substantially rectangular cross section having a straight, flat connecting groove base is produced. In addition, transition surfaces 11 arranged on both sides of the connecting groove 4 are produced, which transition surfaces 11 are likewise flat and have in the present case, but not necessarily, the same inclination angle W relative to the longitudinal axis 5a of the shank 5.

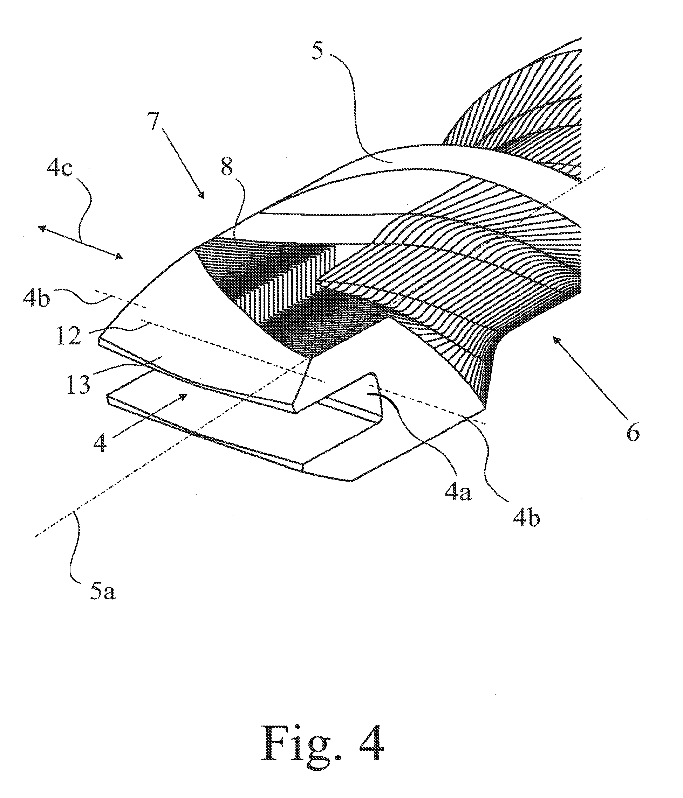

Narrow end faces 13 are located between the connecting groove 4 and the start of the transition surfaces 11, that is to say in the top marginal region of the connecting groove 4. The narrow end faces 13 are segments of an end face of the shank 5 which are left behind after the machining steps are carried out, which end face had the shape of a flat cone before the above machining steps due to a turning operation. This explains the fact that the flat end faces 13, shown in fig. 4 for example, have a slightly curved course of their margin. The end faces 13 are not transition surfaces in the context of the invention.

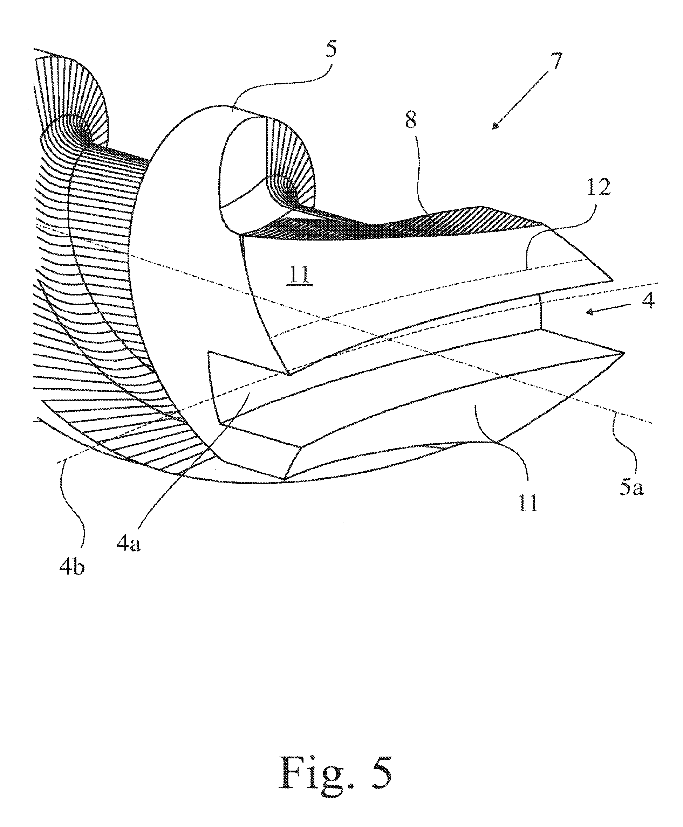

Fig. 5 shows a second exemplary embodiment of the invention, which in principle can be produced by the device schematically shown in fig. 1. In contrast to the first exemplary embodiment, the relative movement between the shank 5 and the device is not effected exclusively along a straight line in the direction of the groove extent 4c, but rather along a machining trajectory which lies completely in a plane oriented parallel to the groove extent 4c and the longitudinal axis 5a of the shank 5. The machining trajectory corresponds, at least over a segment, to the course of the groove base curve 4b.

In the example according to fig. 5, unlike in the first exemplary embodiment, no narrow end face has been left behind, and so the top edge of the connecting groove margin at the same time corresponds to a surface curve of the transition surfaces 11 of the end region 7 of the shank 5.

The transition surfaces 11 have a family of surface curves 12 which are each formed as section curves of the respective transition surface 11 with a section plane parallel to the groove extent 4c and the longitudinal axis 5a of the shank 5. Here, these surface curves 12 are each preferably a parallel displacement of at least one segment of the groove base curve 4b.

In this case, the groove base curve 4b is at the same time a segment of the movement trajectory of the relative movement of the shank 5 and the tool parts 1, 2, 3. The curved movement trajectory is in this case part of a conic section line, in particular part of a circular line. It has a local minimum or a deepest point which lies in the longitudinal axis 5a of the shank 5.

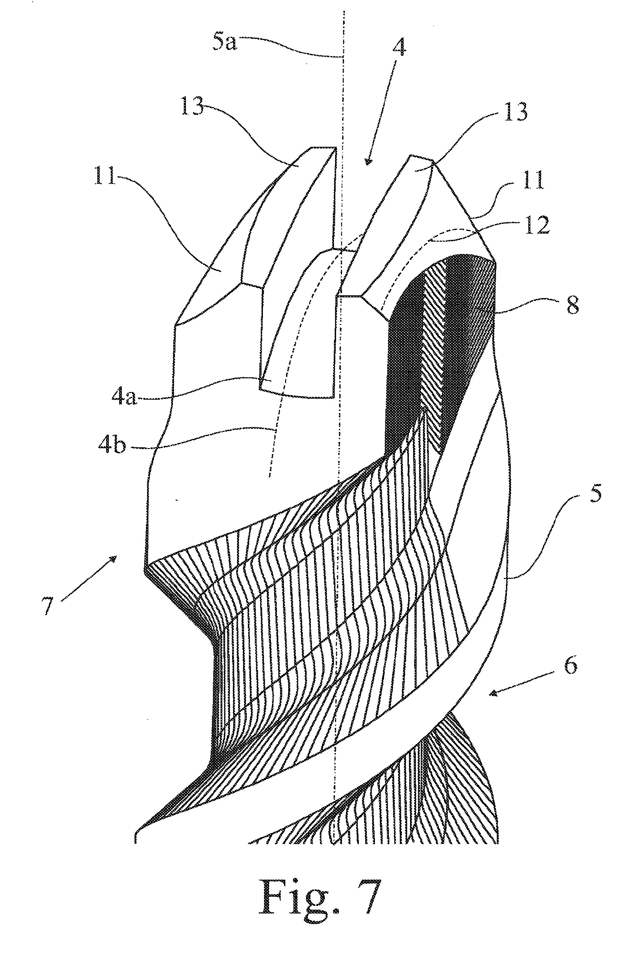

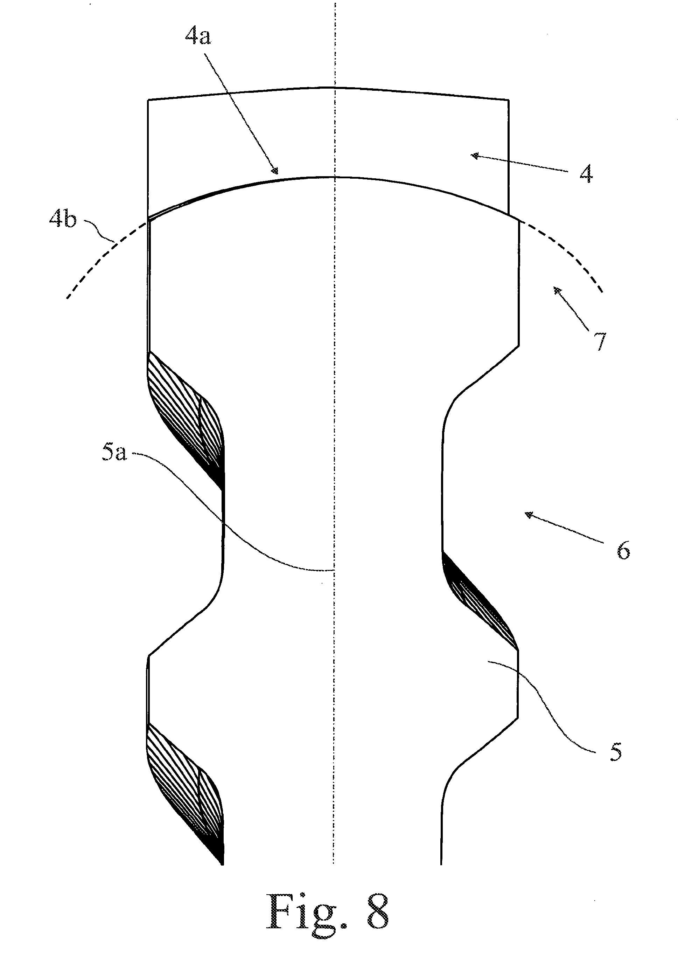

Shown in fig. 7 and fig. 8 is a further exemplary embodiment in which the groove base curve 4b forms a curved line inverted compared with the preceding example. Accordingly, the movement trajectory of the relative movement of shank 5 and tool part 1, 2, 3 has a local minimum in the longitudinal axis 5a of the shank 5. In the example according to fig. 7 and fig. 8, two narrow end faces 13 of the shank 5 have been left behind in the top marginal region of the connecting groove 4, as in the first exemplary embodiment. An exemplary surface curve 12, displaced parallel to the groove base curve 4b, of the transition surface 11 is depicted by a broken line in fig. 7 and results as a section curve between one of the transition surfaces 11 and a section plane parallel to the groove extent 4c and the longitudinal axis 5a.

Provided the above-described groove base curves 4b have a maximum or a minimum, the maximum or minimum preferably lies in the longitudinal axis 5a of the shank 5. In principle, however, provision may also be made for the maximum or the minimum to lie outside the longitudinal axis 5a. The resulting, asymmetrical configuration can be advantageous from the vibration point of view.

Finally, it may be pointed out that, here, the end-face connecting groove 4 of the shank 5 is preferably the only groove 4 extending over the entire shank width. However, it is also conceivable for a plurality of such connecting grooves 4 to be provided, which possibly intersect. For example, this plurality of connecting grooves 4, as viewed from above, run at an angle to one another, for example at an angle of 90° or 120°. In principle, however, provision may also be made for two connecting grooves 4, as viewed from above, to enclose only a small angle with one another, to run next to one another and to merge into one another at least in one region of the shank 5.

## Claims

1. A drill bit, comprising a shank (5) with helix (6) and a drill head (9), wherein the drill head (9) is designed as a carbide part and is inserted into an end-face connecting groove (4) of the shank (5), wherein the base (4a) of the connecting groove (4) extends longitudinally along a groove base curve (4b), wherein a transition surface (11) for the axial transition to the helix (6) is provided to the side of the connecting groove (4), in particular on both sides of the connecting groove (4), and wherein the transition surface (11) is defined by surface curves (12) which in each case originate from a parallel displacement of at least one segment of the groove base curve (4b), wherein the groove base curve (4b) has a straight course,
**characterized in that**
the transition surface (11) extends axially starting from the top marginal region of the connecting groove (4) at any rate in sections over more than half the depth of the connecting groove (4) and **in that** the outline of the transition surface (11) is substantially trapezoidal.

2. The drill bit as claimed in claim 1, **characterized in that** the transition surface (11) is flat, preferably **in that** the transition surface (11) is inclined relative to the longitudinal axis (5a) of the shank (5), preferably **in that** the angle of inclination is between about 30° and about 40°, in particular around about 35°.

3. The drill bit as claimed in one of the preceding claims, **characterized in that** the transition surface (11) extends over a substantial part of the width of the shank (5), in particular over the entire width of the shank (5).

4. A device for producing a drill bit having a shank (5) and a drill head (9), wherein the drill head (9) is designed as a carbide part and is inserted into an end-face connecting groove (4) of the shank (5), comprising a substantially dirk-shaped first tool part (1), rotatable about a rotation axis (1a), for incorporating the connecting groove (4) in the shank (5),
**characterized in that**
the device has at least one second tool part (2) which is arranged to the side of the first tool part (1) and is rotatable together with the first tool part (1) about the same rotation axis (1a), and **in that**, at the same time as the connecting groove (4) is incorporated by the first tool part (1), a first transition surface (11) is shaped by the second tool part (2), said transition surface (11) being arranged on the shank (5) next to the connecting groove (4) .

5. The device as claimed in claim 4, **characterized in that** a third tool part (3) is arranged on the opposite side of the first tool part (1) with respect to the second tool part (2) and is rotatable together with the first tool part (1) about the same rotation axis (1a), wherein, at the same time as the connecting groove (4) is incorporated, a second transition surface (11) is shaped by the third tool part (3), said transition surface (11) being arranged on the opposite side of the connecting groove (4) with respect to the first transition surface (11).

6. A method for producing drill bit, comprising a shank (5) with helix (6) and a drill head (9), wherein the drill head (9) is designed as a carbide part and is inserted into an end-face connecting groove (4) of the shank (5),
**characterized by** the steps:
a. rotating the tool parts (1, 2, 3) of the device as claimed in either of claims 4 and 5 about the rotation axis (1a) ;
b. moving the device and the shank (5) relative to one another, wherein the connecting groove (4) and the at least one transition surface (11) of the shank (5) are shaped by machining by means of the tool parts (1, 2, 3) .

7. The method as claimed in claim 6, **characterized in that** the longitudinal axis (5a) of the shank (5) and the rotation axis (1a) of the device are disposed substantially perpendicularly to one another.

8. The method as claimed in claim 6 or 7, **characterized in that** the movement of the device relative to the shank (5) runs along a straight line, wherein the straight line is disposed in particular perpendicularly to the longitudinal axis (5a) of the shank (5).

9. The method as claimed in one of claims 6 to 8, **characterized in that** the movement of the device relative to the shank (5) runs along a machining trajectory, wherein in particular the machining trajectory lies completely in a plane parallel to the longitudinal axis (5a) of the shank (5).

## Patentansprüche

1. Bohrer, der einen Schaft (5) mit einer Wendel (6) und einen Bohrkopf (9) umfasst, wobei der Bohrkopf (9) als ein Hartmetallteil ausgelegt ist und in eine Stirnflächenverbindungsnut (4) des Schafts (5) eingesetzt ist, wobei die Hinterseite (4a) der Verbindungsnut (4) in Längsrichtung entlang einer Nutgrundkurve (4b) verläuft, wobei auf der Seite der Verbindungsnut (4), insbesondere auf beiden Seiten der Verbindungsnut (4), eine Übergangsfläche (11) für den axialen Übergang zu der Wendel (6) vorgegehen ist und wobei die Übergangsfläche (11) durch Oberflächenkurven (12) definiert ist, die in jedem Fall von einer Parallelverschiebung wenigstens eines Segments der Nutgrundkurve (4b) ausgehen, wobei die Nutgrundkurve (4b) einen geraden Verlauf aufweist,
**dadurch gekennzeichnet, dass**
die Übergangsfläche (11) von dem oberen Randgebiet der Verbindungsnut (4) beginnend axial mit irgendeiner Rate in Abschnitten über mehr als die Hälfte der Tiefe der Verbindungsnut (4) verläuft und dass der Umriss der Übergangsfläche (11) im Wesentlichen trapezförmig ist.

2. Bohrer nach Anspruch 1, **dadurch gekennzeichnet, dass** die Übergangsfläche (11) flach ist, wobei die Übergangsfläche (11) vorzugsweise relativ zu der Längsachse (5a) des Schafts (5) geneigt ist, wobei der Neigungswinkel vorzugsweise zwischen etwa 30° und etwa 40°, insbesondere um etwa 35°, beträgt.

3. Bohrer nach einem der vorergehenden Ansprüche, **dadurch gekennzeichnet, dass** die Übergangsfläche (11) über einen wesentlichen Teil der Breite des Schafts (5), insbesondere über die gesamte Breite des Schafts (5), verläuft.

4. Vorrichtung zum Herstellen eines Bohrers mit einem Schaft (5) und einem Bohrkopf (9), wobei der Bohrkopf (9) als ein Hartmetallteil ausgelegt ist und in eine Stirnflächenverbindungsnut (4) des Schafts (5) eingesetzt ist, wobei die Vorrichtung ein im Wesentlichen scheibenförmiges erstes Werkzeugteil (1) umfasst, das zum Aufnehmen der Verbindungsnut (4) in dem Schaft (5) um eine Drehachse (1a) drehbar ist,
**dadurch gekennzeichnet, dass**
die Vorrichtung wenigstens ein zweites Werkzeugteil (2) aufweist, das an der Seite des ersten Werkzeugteils (1) angeordnet ist und zusammen mit dem ersten Werkzeugteil (1) um dieselbe Drehachse (1a) drehbar ist, und dass gleichzeitig, während die Verbindungsnut (4) von dem ersten Werkzeugteil (1) aufgenommen wird, durch das zweite Werkzeugteil (2) eine erste Übergangsfläche (11) geformt wird, wobei die Übergangsfläche (11) in der Nähe der Verbindungsnut (4) an dem Schaft (5) angeordnet wird.

5. Vorrichtung nach Anspruch 4, **dadurch gekennzeichnet, dass** in Bezug auf das zweite Werkzeugteil (2) auf der gegenüberliegenden Seite des ersten Werkzeugteils (1) ein drittes Werkzeugteil (3) angeordnet ist und zusammen mit dem ersten Werkzeugteil (1) um dieselbe Drehachse (1a) drehbar ist, wobei gleichzeitig, während die Verbindungsnut (4) ausgenommen wird, durch das dritte Werkzeugteil (3) eine zweite Übergangsfläche (11) geformt wird, wobei die Übergangsfläche (11) in Bezug auf die erste Übergangsfläche (11) auf der gegenüberliegenden Seite der Verbindungsnut (4) angeordnet wird.

6. Verfahren zum Herstellen eines Bohrers, der einen Schaft (5) mit einer Wendel (6) und einen Bohrkopf (9) umfasst, wobei der Bohrkopf (9) als ein Hartmetallteil ausgelegt ist und in eine Stirnflächenverbindungsnut (4) des Schafts (5) eingesetzt ist,
**gekennzeichnet durch** die folgenden Schritte:
a. Drehen der Werkzeugteil (1, 2, 3) der Vorrichtung nach einem der Ansprüche 4 und 5 um die Drehachse (1a);
b. Bewegen der Vorrichtung und des Schafts (5) relativ zueinander, wobei die Verbindungsnut (4) und die wenigstens eine Übergangsfläche (11) des Schafts (5) durch Bearbeiten mittels der Werkzeugteile (1, 2, 3) geformt werden.

7. Verfahren nach Anspruch 6, **dadurch gekennzeichnet, dass** die Längsachse (5a) des Schafts (5) und die Drehachse (1a) der Vorrichtung im Wesentlichen senkrecht zueinander angeordnet sind.

8. Verfahren nach Anspruch 6 oder 7, **dadurch gekennzeichnet, dass** die Bewegung der Vorrichtung relativ zu dem Schaft (5) entlang einer Geraden verläuft, wobei die Gerade insbesondere senkrecht zu der Längsachse (5a) des Schafts (5) angeordnet ist.

9. Verfahren nach einem der Ansprüche 6 bis 8, **dadurch gekennzeichnet, dass** die Bewegung der Vorrichtung relativ zu dem Schaft (5) entlang einer Bearbeitungstrajektorie verläuft, wobei die Bearbeitungstrajektorie insbesondere vollstandig in einer Ebene parallel zu der Längsachse (5a) des Schafts (5) liegt.

## Revendications

1. Foret, comprenant une tige (5) avec une hélice (6) et une tête de foret (9), la tête de foret (9) étant conçue sous forme de pièce en carbure et étant insérée dans une gorge de connexion (4) de face de bout de la tige (5), la base (4a) de la gorge de connexion (4) s'étendant longitudinalement le long d'une courbe de base de la gorge (4b), une surface de transition (11) pour la transition axiale à l'hélice (6) étant prévue sur le côté de la gorge de connexion (4), en particulier sur les deux côtés de la gorge de connexion (4), et la surface de transition (11) étant définie par des courbes de surface (12) qui, dans chaque cas, proviennent d'un déplacement parallèle d'au moins un segment de la courbe de base de la gorge (4b), la courbe de base de la gorge (4b) ayant une allure droite,
**caractérisé en ce que**
la surface de transition (11) s'étend axialement à partir de la région marginale supérieure de la gorge de connexion (4), en tout cas dans des sections sur plus de la moitié de la profondeur de la gorge de connexion (4) et **en ce que** le pourtour de la surface de transition (11) est substantiellement trapézoïdal.

2. Foret selon la revendication 1, **caractérisé en ce que** la surface de transition (11) est plate, de préférence **en ce que** la surface de transition (11) est inclinée.par rapport à l'axe longitudinal (5a) de la tige (5), de préférence **en ce que** l'angle d'inclinaison est compris entre environ 30° et environ 40°, en particulier est autour d'environ 35°.

3. Foret selon l'une quelconque des revendications précédentes, **caractérisé en ce que** la surface de transition (11) s'étend sur une partie substantielle de la largeur de la tige (5), en particulier sur toute la largeur de la tige (5).

4. Dispositif pour produire un foret ayant une tige (5) et une tête de foret (9), la tête de foret (9) étant conçue sous forme de pièce en carbure et étant insérée dans une gorge de connexion (4) de face de bout de la tige (5), comprenant une première partie d'outil (1) substantiellement en forme de disque, pouvant tourner autour d'un axe de rotation (1a), pour incorporer la gorge de connexion (4) dans la tige (5),
**caractérisé en ce que**
le dispositif présence au moins une deuxième partie d'outil (2) qui est disposée sur le côté de la première partie d'outil (1) et qui peut tourner conjointement avec la première partie d'outil (1) autour du même axe de rotation (1a), et **en ce qu'**en même temps que la gorge de connexion (4) est incorporée par la première partie d'outil (1), une première surface de transition (11) est façonnée par la deuxième partie d'outil (2), ladite surface de transition (11) étant disposée sur la tige (5) à côté de la gorge de connexion (4).

5. Dispositif selon la revendication 4, **caractérisé en ce qu'**une troisième partie d'outil (3) est disposée sur le côté opposé de la première partie d'outil (1) par rapport à la deuxième partie d'outil (2) et peut tourner conjointement avec la première partie d'outil (1) autour du même axe de rotation (1a), une deuxième surface de transition (11), en même temps que la gorge de connexion (4) est incorporée, étant façonnée par la troisième partie d'outil (3), ladite surface de transition (11) étant disposée sur le côté opposé de la gorge de connexion (4) par rapport à la première surface de transition (11).

6. Procédé pour produire un foret, comprenant une tige (5) avec une hélice (6) et une tête de foret (9), la tête de foret (9) étant conçue sous forme de pièce en carbure et étant insérée dans une gorge de connexion (4) de face de bout de la tige (5), **caractérisé par** les étapes suivantes :
a. rotation des parties d'outil (1, 2, 3) du dispositif selon les revendications 4 et 5 autour de l'axe de rotation (1a) ;
b. déplacement du dispositif et de la tige (5) l'un par rapport à l'autre, la gorge de connexion (4) et l'au moins une surface de transition (11) de la tige (5) étant façonnées par usinage au moyen des parties d'outil (1, 2, 3).

7. Procédé selon la revendication 6, **caractérisé en ce que** l'axe longitudinal (5a) de la tige (5) et l'axe de rotation (1a) du dispositif sont disposés substantiellement perpendiculairement l'un à l'autre.

8. Procédé selon la revendication 6 ou 7, **caractérisé en ce que** le mouvement du dispositif par rapport à la tige (5) s'étend le along d'une ligne droite, la ligne droite étant disposée en particulier perpendiculairement à l'axe longitudinal (5a) de la tige (5).

9. Procédé selon l'une quelconque des revendications 6 à 8, **caractérisé en ce que** le mouvement du dispositif par rapport à la tige (5) s'étend le long d'une trajectoire d'usinage, la trajectoire d'usinage étant en particulier complètement dans un plan parallèle à l'axe longitudinal (5a) de la tige (5).
